# EUROPEAN PATENT SPECIFICATION

(11) **EP 1 132 586 B1**
(45) Date of publication and mention of the grant of the patent: **13.04.2005**
(21) Application number: 01104364.3
(22) Date of filing: 23.02.2001
(51) Int. Cl.: F01N 3/22, F01N 3/34, F01N 3/30

(54) **Exhaust purifier**
Abgasreiniger
Purificateur de gaz d'échappement

(30) Priority: 08.03.2000 JP 2000063406
(43) Date of publication of application: 12.09.2001
(73) Proprietor: Honda Giken Kogyo Kabushiki Kaisha, Minato-ku, Tokyo (JP)
(72) Inventor: Ikeda, Tsugio, K. K. Honda Gijutsu Kenkyusho, Wako-shi, Saitama (JP); Koga, Masahiro, K. K. Honda Gijutsu Kenkyusho, Wako-shi, Saitama (JP); Wakayama, Hirofumi, K. K. Honda Gijutsu Kenkyusho, Wako-shi, Saitama (JP)
(74) Representative: Liska, Horst, Dr.-Ing.

(56) References cited:
- US-A- 3 863 444
- US-A- 4 476 676
- US-A- 4 641 619
- US-A- 5 519 992

## Description

The present invention relates to a simpler exhaust purifier capable of accurate exhaust purification, reliable prevention of the occurrence of afterburning.

An exhaust purifier for oxidizing an unburned component contained in an exhaust gas in an exhaust path by supplying secondary air to the exhaust path of an engine is exemplified by "exhaust purifier for a motorcycle" disclosed in Japanese Patent Laid-open Publication No. Hei. 5-340240.

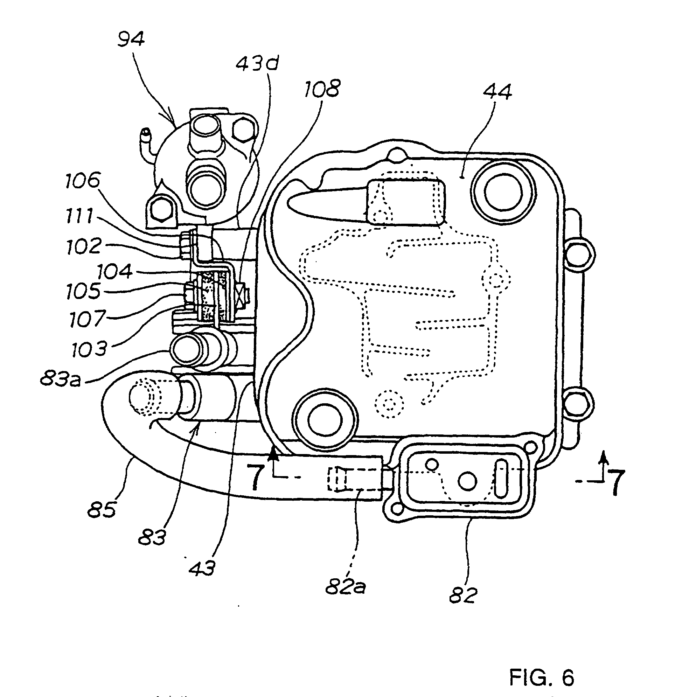

Fig. 6 of the above described publication discloses an exhaust purifier, in which an air filter 85 (the reference numeral is that used in the above described publication) is connected to a control unit 100, having a lead valve 105 and a cut valve 108, through a second piping 81b, the control unit 100 is connected to the exhaust path 37 of the engine 17 through a secondary air introducing pipe 81, and the control unit 100 is connected to an intake pipe 45 of the engine 17 through a negative pressure introducing pipe 116.

Secondary air is supplied from the air filter 85 to inside of the exhaust path 37 through the lead valve 105 of the control unit 100 by negative pressure inside the exhaust path 37. When decelerating, the cut valve 108, which is normally open, located in the control unit 100, is closed by the negative pressure of inside of the intake pipe 45, to stop secondary air supply to the exhaust path 37 finally resulting in prevention of afterburning.

According to the above described art, the cut valve 108 is closed by the negative pressure of inside of the intake pipe 45 and hence, for example, in an engine where an air/ fuel ratio is slightly different for each engine speed and throttle opening, it may occur that an engine speed and throttle opening set to a large air/fuel ratio (thin mixture) causes large negative pressure inside the intake pipe 45 therefore making afterburning difficult and causing closing of the cut valve 108. This prevents exhaust purification. Therefore, the above described exhaust purifier does not allow accurate exhaust purification.

However, controlling the cut valve 108 too finely according to engine speed and throttle opening makes the structure for the exhaust purifier extremely complex and costly.

Also, for example, in the case where the throttle valve is suddenly opened when decelerating, the negative pressure of inside of the intake pipe 45 decreases to open the cut valve 108 finally resulting in supply of secondary air to the inside of the exhaust path 37.

Until the above described throttle valve is opened, in the intake pipe 45, fuel is taken in from a carburetor due to large negative pressure, the mixture becoming the unburned gas is temporarily made to be a thick mixture in the exhaust path 37, and afterburning occurs due to the supply of secondary air. It can therefore be seen that the above described opening and closing of the cut valve 108 does not perfectly prevent afterburning.

US-A-3863444 discloses an exhaust purifier adapted to burn an unburned component contained in an exhaust gas by connecting an air introducing path to an exhaust path of an engine and installing an air control valve in the air introducing path to supply air to the exhaust path by opening the air control valve by opening regulation of a regulating part, wherein said regulating part closes said air control valve and regulates to maintain a closed state for a specified duration while engine speed is under light load and low speed condition.

Thus, the object of the present invention is to provide a simpler exhaust purifier capable of accurate exhaust purification and reliable prevention of the occurrence of afterburning.

In order to achieve the above described object, according to claim 1, there is provided an exhaust purifier adapted to burn an unburned component contained in an exhaust gas by connecting an air introducing path to an exhaust path of an engine and installing an air control valve in the air introducing path to supply air to the exhaust path by opening the air control valve by opening regulation of a regulating part, wherein when receiving speed/opening angle reduction information giving notification of movement from a state, where an engine speed exceeds a speed threshold or an opening threshold of a throttle opening is in excess of a fully open side, to a region where the engine speed is under the speed threshold and the throttle opening is under the opening threshold, said regulating part closes said air control valve and regulates to maintain a closed state for a specified duration, in which the unburned component in the exhaust gas in the exhaust path is exhausted, and to open said air control valve after said specified duration, so that afterburning, which is explosive burning of the unburned component, is prevented.

Control of opening and closing of the air control valve by the engine speed and the throttle opening allows the present exhaust purifier to accurately carry out exhaust purification in comparison with a conventional method, by which a valve installed in the air introducing pipe is subjected to opening and closing control by applying a negative pressure to the intake pipe.

By keeping the closed state of the air regulating valve for the specified duration, the unburned component in the exhaust gas in the exhaust path is exhausted for the specified duration.

By this, when the air regulating valve is opened after the specified duration, afterburning, which is explosive burning of the unburned component, can be reliably prevented.

The exhaust purifier according to the claim 1 executes control of closing the air control valve to closed state for the specified duration, when receiving speed/opening angle reduction information giving notification of a transition from a state where the engine speed exceeds the speed threshold or the opening threshold of the throttle opening exceeds to the fully open side, to a region where engine speed is under a speed threshold and throttle opening is under the opening threshold. Therefore, opening and closing of the air control valve is controlled according to the engine speed and the throttle openings and hence, in comparision with a conventional method, by which the valve installed in the air introducing pipe is subjected to opening and closing control by applying the negative pressure in the intake pipe, exhaust purification is carried out accurately.

Maintaining the closing state of the air regulating valve for the specified duration allows exhausting of the unburned component contained in the exhaust gas in the exhaust path for the specified duration. The air control valve is opened after the specified duration, afterburning, which is explosive burning of the unburned component, can therefore be reliably prevented.

Preferably, when a sudden deceleration information gives notification that a rate of deceleration when engine speed is falling has changed to a rate of deceleration threshold or higher, said regulating part closes said control valve and regulates to a closed state for a specified duration.

The exhaust purifier executes control of closing of the control valve to a closed state for the specified duration, when receiving information, of which speed/opening angle reduction information informing about moving from the state, in which the engine speed exceeds the speed threshold or the opening threshold of the throttle opening exceeds to the fully open side, to the region, in which the engine speed is a speed threshold or lower and throttle opening is the opening threshold or lower and also sudden deceleration information informing about the rate of deceleration, in reduction of the engine speed, changing to the rate of change threshold or higher. Therefore, particularly when the engine speed drops suddenly when a vehicle decelerates, keeping the closed state of the air control valve for the specified duration allows exhausting of the thick unburned component in the exhaust path in the specified duration and when the air control valve is opened after the specified duration, occurrence of afterburning can be reliably prevented.

Particularly, when the engine speed drops suddenly when a vehicle is decelerating, keeping the closed state of the air regulating valve for the specified duration allows exhausting the thick unburned component in the exhaust path for the specified duration and when the air control valve is opened after the specified duration, occurrence of afterburning can be reliably prevented.

Preferably, when the throttle opening exceeds the opening threshold, said regulating part carries out opening and closing regulation of said air control valve according to only the engine speed.

When the throttle opening exceeds the opening threshold, exhaust purification becomes relatively good condition by burning with a sufficient supply of air and therefore further exhaust purification is achieved only by regulation of the engine speed. According to this, the exhaust purifier can be both simpler and cheaper.

The exhaust purifier executes control of opening and closing of the air control valve according to the engine speed, when the throttle opening exceeds the opening threshold. When the throttle opening exceeds the opening threshold, exhaust purification becomes relatively good condition by burning in supply of enough air and therefore, further exhaust purification is achieved only by regulation of the engine speed. According to this, the exhaust purifier 91 can be more simplified to suppress a cost.

A preferred embodiment of the present invention will now be described below in conjunction with the attached drawings.
Fig. 1 is a side view of a motorcycle, for which the exhaust purifier according to the present invention has been applied.
Fig. 2 is the side view, in which essential parts of the motorcycle according to the present invention have been enlarged.
Fig. 3 is a plan view of the air intake chamber and the air cleaner of the motorcycle according to the present invention.
Fig. 4 is a view illustrating the exhaust purifier according to the present invention.
Fig. 5 is the side view of the engine, illustrating the exhaust purifier according to the present invention.
Fig. 6 is a view of the Fig. 5, in the direction of the arrow 6.
Fig. 7 is a sectional view along line 7-7 of Fig. 6.
Fig. 8 is the sectional view of the secondary air control valve of the exhaust purifier according to the present invention.
Fig. 9 is the graph explaining opening and closing control of the secondary air control valve of the exhaust purifier according to the present invention.
Fig. 10 is a graph describing the example of mapping control of the secondary air control valve of the exhaust purifier according to the present invention.
Fig. 11 is the flow chart to explain opening and closing control for the secondary air control valve of the exhaust purifier according to the present invention.

The drawings should be viewed in the direction of the reference numerals.

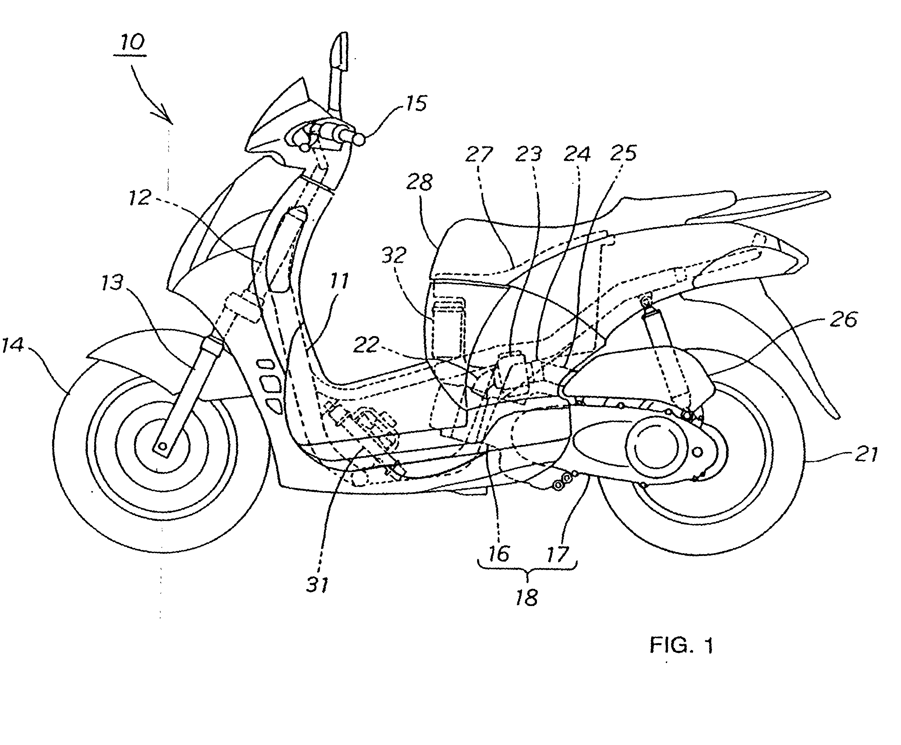

Fig. 1 is a side view of a motorcycle, to which the exhaust purifier according to the present invention is applied; a motorcycle 10 is a scooter type vehicle having a head pipe 12 in a front end of a body frame 11 extending along a longitudinal axis of the body, a front fork 13 and a front wheel 14 are steerably attached to the head pipe 12, a handle 15 is integrally installed on a top part of the front fork 13, a power unit 18 comprising the engine 16 and a driving mechanism 17 is installed on a rear part of body frame 11, a rear wheel 21 is attached to an output shaft of the rear end of the power unit, a carburetor 23 is connected to the top part of the engine 16 through the intake pipe 22, a connecting tube 24 is connected to carburetor 23, an air cleaner 26 is connected to connecting tube 24 through an aspiration chamber 25, a luggage box 27 to contain a helmet and is attached to the body frame 11 located in the top part of the engine 16, and a seat 28 is located in the top part of the luggage box 27.
Here, 31 is a radiator to cool the engine 16 and 32 is a battery.

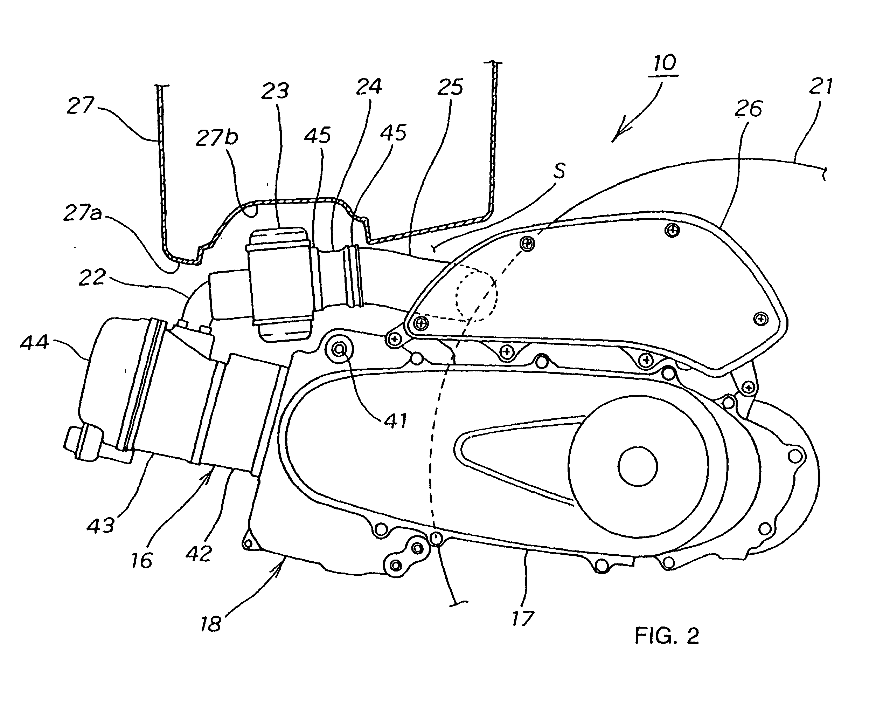

Fig. 2 is the side view in which an essential part of the motorcycle according to the present invention has been enlarged, showing a state in which the intake pipe 22, carburetor 23, connecting tube 24, aspiration chamber 25, and the front end of the air cleaner 26 are located in a space between the luggage box 27 and the power unit 18.
Numeral 41 is a swing shaft, swinging against the body frame 11, of the power unit 18 (refer to the Fig. 1,) numeral 42 is a cylinder block, numeral 43 is a cylinder head, and numeral 44 is a head cover.

In the luggage box 27, the position of a bottom part 27a is lowered to gain as low a containing capacity as possible and a recessed part 27b is formed in the bottom part 27a to avoid interference with the carburetor.
The carburetor 23 and the connecting tube 24 are connected to the connecting tube 24 and the aspiration chamber 25 with bands 45 and 45, respectively.

The aspiration chamber 25 has an equal height to that of the connecting tube 24 in the side view.
The air cleaner 26 is formed in a shape of which bottom end is fitted to the top end of the power unit 18 to improve a unitary appearance with the power unit 18 resulting in a better external appearance.

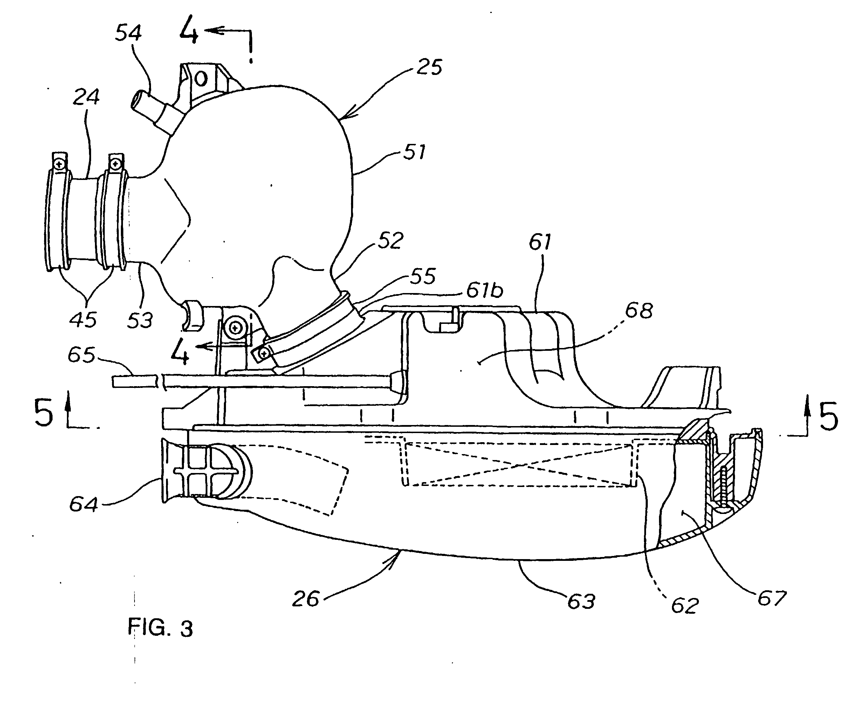

Fig. 3 is a plan view of the aspiration chamber and the air cleaner of the motorcycle according to the present invention. The aspiration chamber comprises a main part 51 of almost square in shape in a plan view and an entrance tube part 52, an exit tube part 53, and a secondary air outlet tube part 54, which communicate with the inside of the main part 51, wherein the air cleaner 26 is connected to the entrance tube part 52 with the band 55 and the connecting tube 24 is connected to the exit tube part 53 with the band 45.

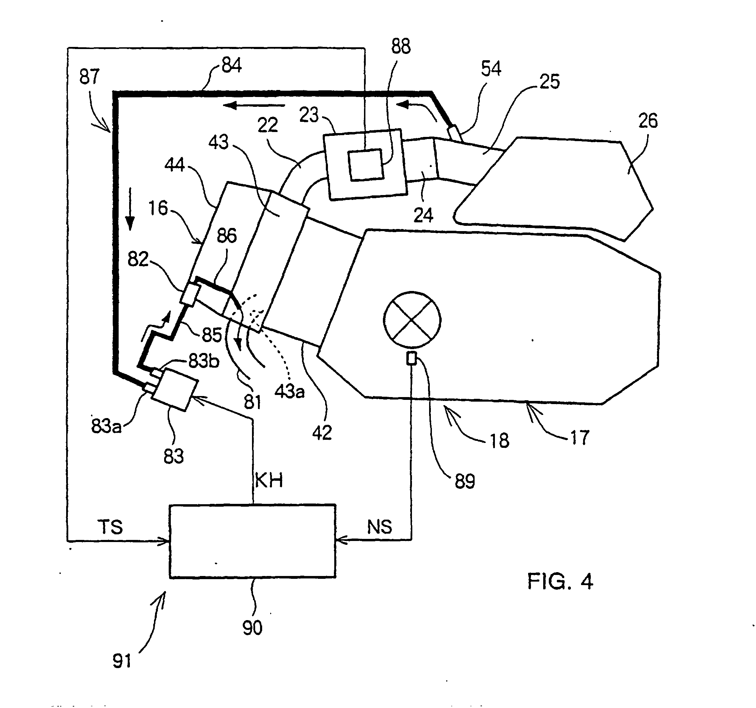

The secondary air outlet tube part 54 is a part supplying air (named secondary air) to oxidize HC (hydrocarbon,) CO (carbon mono-oxide,) and NOx (nitrogen compounds) in the exhausting system by connecting to an exhausting system through a tube (details are mentioned in Fig. 4.).

The air cleaner 26 comprises an air cleaner case 61, an air cleaner element 62 fitted to an opening face of the air cleaner case 61, a case cover 63 fitted to the air cleaner case 61 to cover the air cleaner element 62, an aspiration orifice 64 fitted to the case cover 63, an air supplying tube 65 fitted to the air cleaner case 61 to supply air to the carburetor 23 (refer to the Fig. 2.)

Numeral 61b is a chamber fitting part installed in the air cleaner case 61 to fit the entrance tube part 52, 67 is a dirty side formed by the air cleaner element 62 and the case cover 6-3, and 68 a clean side formed by the air cleaner case 61 and the air cleaner element 62.

Fig. 4 is a view illustrating the exhaust purifier according to the present invention.
In Fig. 4, numeral 43a is an exhaust port with the exhaust path installed in a cylinder head, numeral 81 is an exhaust pipe fitted to the cylinder head 43, numeral 82 is a lead valve fitted to the head cover 44, numeral 83 is a secondary air control valve taken as the air regulating valve, numeral 84 is a first secondary air path, numeral 85 is a second secondary air path, and numeral 86 is a cylinder head path.

The above described first secondary air path 84, second secondary air path 85, and cylinder head path 86 constitute a secondary-air introducing path 87 taken as the air introducing path.

Numeral 88 is a throttle opening sensor fitted to the carburetor in order to Numeral 88 is a throttle opening sensor fitted to the carburetor in order to detect the throttle opening, numeral 89 is a speed sensor installed around a crank shaft to detect engine speed, numeral 90 is a control unit taken as a control part operating opening and closing control for the secondary air control valve 83 by sending an opening/closing signal KH to the secondary air control valve 83 on the basis of a throttle opening signal TS from the throttle opening sensor 88 and an engine speed signal NS from a speed sensor 89.

The exhaust purifier 91 according to the present invention is a device comprising the secondary air outlet tube part 54, the secondary air control valve 83, the second secondary air path 85, the lead valve 82, the cylinder head path 86, the throttle opening sensor 88,the speed sensor 89, and a control unit 90.

When the engine 16 is operated, in the case where the secondary air control valve 83 has been opened, air in the aspiration chamber 25 moves from the secondary air outlet tube part 54 to the secondary air control valve 83 through the first secondary air path 84 due to the negative pressure in rippling of the pressure in the exhaust port 43a.

In addition, air moves from the secondary air control valve 83 to the lead valve 82 opened by the above described negative pressure through the second secondary air path 85 and flows in the exhaust port 43a and the exhaust pipe 81 through the cylinder head path 86 passing through the lead valve 82.
And, HC, Co, NOx, and the like are oxidized in the exhaust port 43a and the exhaust pipe 81 to achieve exhaust purification.

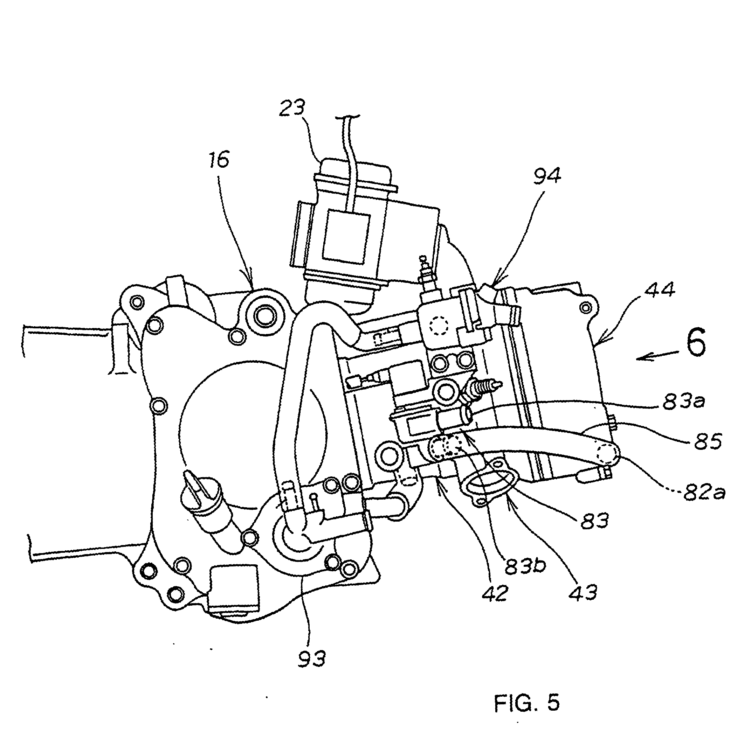

Fig. 5 is a side view of the engine, illustrating the exhaust purifier according to the present invention and the Fig. 2 is a side view of an opposite side of the engine 16 shown in the Fig. 2.
In the engine 16, the secondary air control valve 83 is fitted to the side face of the cylinder head 43.
Here, numeral 83a and 83b are an air aspiration orifice and an air discharging orifice, respectively, of the secondary air control valve 83, numeral 93 is a water pump, and numeral 94 is a thermostat.

Fig. 6 is a view of the Fig. 5, in the direction of the arrow 6, and showing a projected part 43d prepared on the side face of the cylinder head 43 and both the secondary air control valve 83 and thermostat 94 fitted to the projected part 43d by tightening by a bolt 102.

Specifically, a thin plate-like bracket 103 is fitted to the secondary air control valve 83, the bracket 103 is put between cushion rubbers 104 and 105 (cushion rubbers 104 and 105 are integral,) and a crank-like stay 106 is tightened together with these bracket 103 and cushion rubbers 104 and 105 by the bolt 107 and a nut 108 fixed to the stay 106.

In addition, it is also shown that the bracket 111 is fitted to the thermostat 94 and both the bracket 111 and the above described stay 106 are fitted to the projected part 43d with the bolt 102.

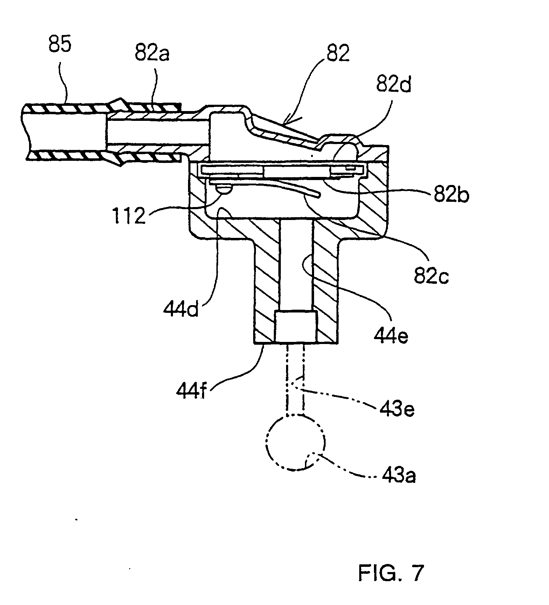

Fig. 7 is a sectional view of 7- 7 line of the Fig. 6.
The lead valve 82 comprises an air intake part 82a, a thin plate-like lead 82b having elasticity, a stopper 82c regulating openings of the lead 82b, and a base part 82d to fix the lead 82b and the stopper 82c with a screw 112.

Here, numeral 43e is a secondary air discharging hole made in the cylinder head 43 (refer to the Fig. 5,) of which one end is opened in the exhaust port 43a, numeral 44d is a recessed part, to which the lead valve 82 is fitted, in the head cover 44, numeral 44e is a communication hole, of which one end is opened in the recessed part 44d of the head cover 44, connected to the secondary-air discharging hole 43e of cylinder head 43, and numeral 44f is the end of the head cover 44 in the cylinder head 43 side.
The above described discharging hole 43e and the communication hole 44e constitute the cylinder head path 86 shown in the Fig. 4.

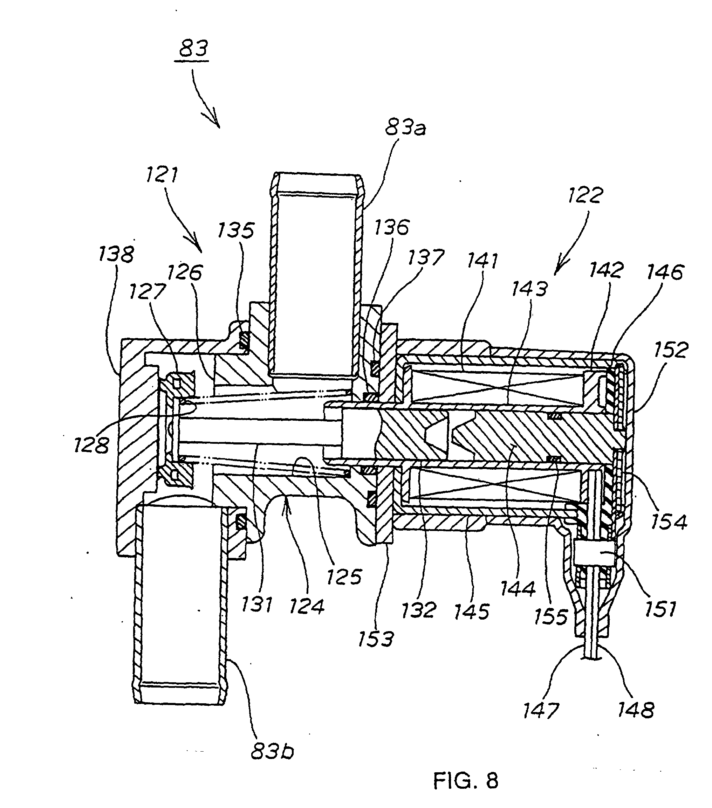

Fig. 8 is a sectional view of the secondary air control valve of the exhaust purifier according to the present invention. The secondary air control valve 83 is a solenoid valve and comprises a valve main body 121 and an actuating part 122 to actuate the valve main body 121.

The valve main body 121 comprises a valve case 124, an air path hole 125 made in the valve case 124, a valve seat part 126 formed in the valve case 124, a valve body 127 to close the air path hole 125 by seating on the valve seat part 126, a coil spring 128 to press the valve body 127 to the opening side, a valve rod 131 fitted to the valve body 127, and a plunger installed in the end part of the valve rod 131. 135. Numeral 136, and 137 are O rings and 138 is a cover of the valve case 124.
The above described air aspiration orifice 83a and air discharging orifice 83b are those fitted to both ends of the air path hole 125.

The actuating part 122 comprises a bobbin142 having a coil 141, a core 144 which works as a shaft of the bobbin, fixed to inside of the cylinder part 143, a bobbin case in which the bobbin is housed, a gasket 146 to close the end part of the bobbin case 145, lead wires 147 and 148 to electrify the coil 141, a clamp 151 to bundle these lead wires 147 and 148, a cap 152 covering the bobbin case 145, gasket 146, and lead wires 147 and 148, and a clamp 151. Numerl153 is a large plate, which is fitted to the end part of the cap 152 and installed in a connection part to the valve main body 121, numeral 154 is a small plate fitted to the end part of the core 144, and 155 is an O ring.

The secondary air control valve 83 is, in case of no application of a voltage to the coil 141, in the opening state as shown in the figure. When the voltage is applied to the coil 141, the core 144 attracts the plunger 132 inserted movably in the cylinder 143 to seat the valve body 127 on the valve seat part 126 through the valve rod 131 and finally the secondary air control valve 83 becomes closed.

As described above, the secondary air control valve 83 switches between two states, fully open and fully closed. However, with the secondary air control valve 83, applying a pulse voltage to the coil 141 allows setting of a control valve opening range between a fully open state and fully-closed state by changing a pulse duty factor (duty ratio) of the pulse voltage in a range between 0% to 100% to repeat fully open and full-closing states.
For example, the pulse duty factor 0 (%) expresses fully-open, the pulse duty factor 100 (%) expresses fully closed, and the pulse duty factor 25 (%) means three-quarters open.

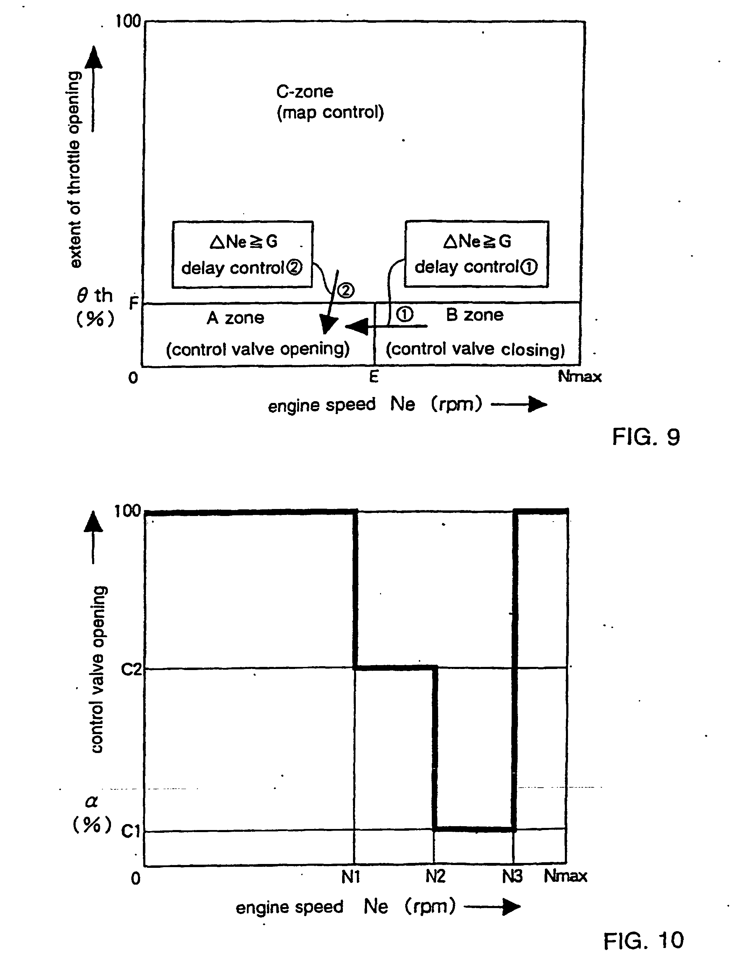

Fig. 9 is a graph describing opening and closing control of the secondary air control valve of the exhaust purifier according to the present invention, axes of ordinates and abscissas represent the throttle openings θ th (unit is %) and the engine speed Ne (unit is rpm) , respectively.
If a zone A is assumed as the region in which the engine speed Ne is a set engine speed E (rpm) or less as the speed threshold and the throttle opening θ th (unit is %) is a set throttle opening F (%) or less as the opening threshold, the zone A is a region in which the secondary air control valve 83 (hereafter, simply "control valve") is switched to the opened state.
The reason why the zone A is switched to the opened state is because the zone A is a region most frequently used in car driving and the mixture supplied from the carburetor is thick to make the unburned component in the exhaust path larger and therefore, exhaust purification is essential.

On the other hand, if a zone B is assumed as the region in which the engine speed Ne exceeds the set engine speed E (rpm) and is up to the Nmax (rpm,) which is the maximum engine speed, and the throttle opening θ th is the set throttle opening F (%) or less, the zone B is the region in which the control valve is switched to the closed state.
The reason why the zone B is switched to the closed state is because the mixture supplied from the carburetor becomes thin to make the unburned component flowing in the exhaust path smaller.

Furthermore, if a zone C is assumed as the region other than the zones A and zone B; in other words, the region in which the engine speed Ne ranges between 0 to N max (rpm) and the throttle opening θ th is the region over the set throttle opening F (%) up to 100% (fully-open), the zone C is the region in which opening and closing operations of the control valve are carried out by a mapping control according to the engine speed. The mapping control will be described in detail in Fig. 10.

The reason why opening and closing operations of the control valve are carried out according to the engine speed in the zone C is because in the zone C, an increased throttle opening brings about a relatively good state of exhaust purification through burning by supply of sufficient air and thus, only opening and closing operations of the control valve are carried out according to the engine speed thus allowing the exhaust to be purified still further.

When a car suddenly decelerates, the engine speed drops and also the throttle opening decreases and thus, the negative pressure for air intake increases in a downstream of the throttle valve to take in the fuel from the carburetor and the mixture becomes thick, which results in increase in content of the unburned component, which has not burnt in a combustion chamber, and therefore flows out in the exhaust path.

When secondary air is supplied to the unburned component, explosive burning, i. e., afterburning occurs to cause a noise and damage to the exhaust pipe and a muffler and therefore the following control is carried out by the control unit of the exhaust purifier according to the present invention: the control valve is switched once to the closed state during sudden deceleration and the closed state is maintained for a specified duration.

Specifically, the control is that by which during a transition from the zone B to the zone A as shown by an arrow (1) and during a transition from the zone C to the zone A as shown by an arrow (2,) the control valve is switched to the closed state, the closed state is kept for the specified duration (in case of the arrow (1), a time T1, and in case of the arrow (2), a time T2.)
The control in the above described case of the arrow (1) and case of the arrow (2) are named delay control (1) and delay control (2.)

In addition, in order to determine sudden deceleration, the rate of change G of set engine speed, namely, a change H (deduction) of engine speed in a unit time J, is adopted to determine whether to carry out delay control (1) and delay control (2) in the case where the rate of change of engine speed ΔNe in transition of the arrow (1) and arrow (2) is above the rate of change G of the set engine speed.

Fig. 10 is a graph illustrating an example of mapping control of the secondary air control valve of the exhaust purifier according to the present invention. Axes of ordinates and abscissas represent the throttle openings θ th (unit is %) and the engine speed Ne (unit is rpm,) respectively.
In the range of the engine speed Ne from 0 to N1 (rpm,) the control valve openings α is 100% (fully-open), in the range of the engine speed Ne from N1 to N2 (rpm), the control valve openings α is C2 (%), in the range of the engine speed Ne from N2 to N3 (rpm) the control valve openings α is C1 (%), and in the range of the engine speed Ne from N3 to Nmax (rpm), the control valve openings α is 100% (fully-open).
As described above, in the zone C described in Fig. 9, the control valve is opened only according to the engine speed Ne.

As explained in the above described Fig. 4, Fig. 9, and Fig. 10, the present invention is the exhaust purifier 91 adopted to connect the secondary-air introducing path 87 to the exhaust port 43a of the engine 16, put the secondary air control valve 83 in the secondary-air introducing path 87, and open the secondary air control valve 83 by opening and closing control of the control unit 90 to supply secondary air to the exhaust port 43a finally allowing burning of the unburned component contained in the exhaust gas, wherein the control unit 90, the secondary air control valve 83 is subjected to opening and closing control according to the engine speed Ne when the throttle openings θ th exceeds the set throttle opening F.

When the throttle openings θ th exceeds the set throttle opening F, exhaust purification becomes relatively good by burning with a sufficient supply of air and therefore, further exhaust purification is achieved only by regulation of the engine speed Ne.
According to this, the exhaust purifier 91 can be more simplified to suppress a cost.

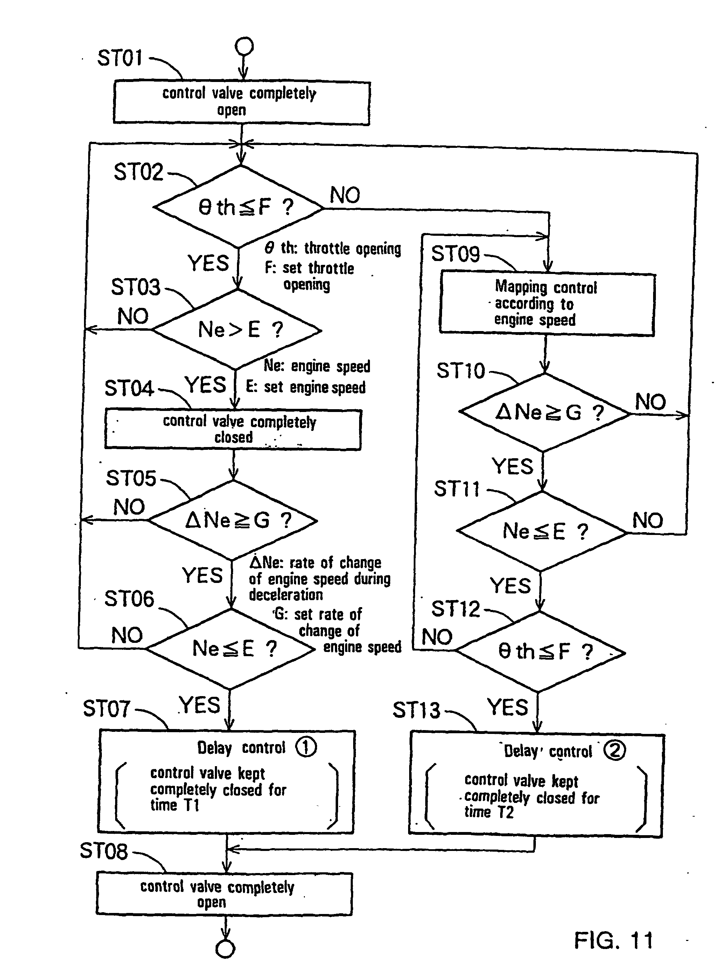

Fig. 11 is a flow chart to explain opening and closing control for the secondary air control valve of the exhaust purifier according to the present invention. For reference, STxx represents a step number.
ST01 ... Turn the control valve to fully open state.

ST02 ... judge as to whether the throttle opening θ th is small or equal in comparison with the set throttle opening F.
If it is not θ th ≦ F (NO,) go to ST09. (After the ST09, opening and closing control is carried out in the zone C (refer to the Fig. 9))
If it is θ th ≦ F (YES,) go to ST03.

ST03 ... Judge as to whether the engine speed Ne is larger or not than the set engine speed E.
If it is not Ne > E (NO,) go back to ST02.

If it is Ne > E (YES,) go to ST04. (Hereafter, opening and closing control is carried out in the zone B (refer to the Fig. 9))

ST04 ... Turn the control valve to the fully-closed state.
ST05 ... Judge as to whether the rate of change Δ Ne of engine speed in deceleration is larger than or equal to the rate of change G of set engine speed.
If it is not Δ NE ≧ G (NO,) go back to ST02.
If it is ΔNE ≧ G (YES,) go to ST06.

ST06 ... Judge as to whether the engine speed Ne is smaller or equal in comparison with the set engine speed E.
If it is not Ne ≦ E (NO,) go back to ST02.
If it is Ne ≦ E (YES,) go to ST07.
ST07 ... Execute delay control (1.) In other words, for the time T1, keep the control valve in fully open state.
ST08 ... Make the control valve full open.

ST09 ... Execute mapping control shown in the Fig. 10 according to the engine speed.
ST10 ... Judge as to whether the rate of change ΔNe of engine speed in deceleration is larger than or equal to the rate of change G of set engine speed.
If it is not Δ Ne ≧ G (NO,) go back to ST02.
If it is ΔNe ≧ G (YES,) go to ST11.

ST11 ... Judge as to whether the engine speed Ne is smaller or equal in comparison with the set engine speed E.
If it is not Ne ≦ E (NO,) go back to ST02.
If it is Ne ≦ E (YES,) go to ST12.

ST12 ... Judge as to whether the throttle opening θ th is smaller or equal in comparison with the set throttle opening F.
If it is not θ th ≦ F (NO,) go to ST09.
If it is θ th ≦ F (YES,) go to ST13.
ST13 ... Execute delay control (2.) In other words, for the time T2, keep the control valve in full-closing state. Hereafter, go to ST08.

As described in the Fig. 4 and the Fig. 9, the present invention is the exhaust purifier 91 characterized in that the secondary-air introducing path 87 is connected to the exhaust port 43a of the engine 16, the secondary air control valve 83 is put in the secondary-air introducing path 87, and the secondary air control valve 83 is opened by opening and closing control of the control unit 90 to supply secondary air to the exhaust port 43a finally allowing burning the unburned component contained in the exhaust gas, wherein when receiving both pieces of information, of which speed/opening angle reduction information informing about transition from the state, in which the engine speed Ne exceeds the set engine speed E or the throttle opening θ th exceeds the set throttle opening F, to the region, in which, the engine speed Ne is the set engine speed E or lower and the throttle openings θ th is the set throttle opening F or less, namely, the zone A, and information about sudden deceleration, in which the rate of change of the engine speed Δ Ne in reduction of the engine speed Ne changes to the rate of change G or higher of the set engine speed, the control unit 90 executes control operation, by which the secondary air control valve 83 is closed and the closing state is kept for the specified duration T1 or the specified duration T2.

Opening and closing of the secondary air control valve 83 is controlled by the engine speed NE and the throttle openings θ th and thus, in comparison with a conventional method, by which the valve prepared in the air introducing pipe is subjected to opening and closing control by applying the negative pressure inside the intake pipe, exhaust purification can be accurately carried out.

By keeping the closing state of the secondary air control valve 83 for the specified duration T1 or the specified duration T2 (particularly, when the engine speed suddenly drops in deceleration of the car,) the unburned component (especially, thick unburned component) contained in the exhaust gas in the exhaust port 43a and the exhaust pipe 81 can be exhausted in the specified duration T1 or T2.
According to this, when the secondary air control valve 83 is opened after the specified duration T1 and T2, afterburning, by which the unburned component explosively bums, can be reliably prevented.

In the present embodiment, as described in the Fig. 9, when receiving information, of speed/opening angle reduction information giving notification of a transition to the zone A and information regarding sudden deceleration, in which the rate of change Δ Ne of the engine speed changes to the rate of change G or higher of the set engine speed, the control unit 90 executes control to maintain the closing state of the secondary air control valve 83. However, the control unit 90 may be adapted to execute control to maintain the closing state of the secondary air control valve 83 when receiving only speed/opening angle reduction information giving notification of a transition to the zone A.

A control unit 90 executes control operation, by which the secondary air control unit 83 is closed and the closing state is kept for the specified duration T1 or the specified duration T2, when receives speed/opening angle reduction information informing about transition from the state, in which the engine speed Ne exceeds the set engine speed E or the throttle openings θ th exceeds the set throttle opening F to the full-open side, to the region, in which, the engine speed Ne is the set engine speed E or lower and the throttle openings θ th is the set throttle opening F or less, namely, the zone A.
The control of opening and closing of the air regulating valve by the engine speed and the throttle opening allows accurate exhaust purification in comparison with the conventional method. In addition, keeping the closed state of the air regulating valve for the specified duration allows exhausting the unburned component contained in the exhaust gas in the exhaust path in the specified duration to realize reliable prevention of afterburning.

## Claims

1. An exhaust purifier adapted to burn an unburned component contained in an exhaust gas by connecting an air introducing path (87) to an exhaust path (43a) of an engine and installing an air control valve (83) in the air introducing path to supply air to the exhaust path by opening the air control valve (83) by opening regulation of a regulating part, wherein when receiving speed/opening angle reduction information giving notification of movement from a state, where an engine speed (Ne) exceeds a speed threshold (E) or an opening threshold (F) of a throttle opening (θₜₕ) is in excess of a fully open side, to a region where the engine speed (Ne) is under the speed threshold (E) and the throttle opening (θₜₕ) is under the opening threshold (F), said regulating part closes said air control valve (83) and regulates to maintain a closed state for a specified duration (T₁, T₂), in which the unburned component in the exhaust gas in the exhaust path (43a) is exhausted, and to open said air control valve (83) after said specified duration (T₁, T₂), so that afterburning, which is explosive burning of the unburned component, is prevented.

2. An exhaust purifier according to claim 1, wherein when a sudden deceleration information gives notification that a rate of engine speed deceleration has changed to a rate of deceleration threshold (G) or higher, said regulating part closes said air regulating valve (83) and regulates to a closed state for said specified duration (T₁,T₂).

3. An exhaust purifier according to claim 1, wherein when the throttle opening (θₜₕ) exceeds the opening threshold (F), said regulating part carries out opening and closing regulation of said air control valve (83) according to only the engine speed (Ne).

## Patentansprüche

1. Abgasreiniger, der dazu ausgelegt ist, eine in einem Abgas enthaltene unverbrannte Komponente zu verbrennen, durch Verbindung eines Luftansaugwegs (87) mit einem Abgasweg (43a) eines Motors, und Installieren eines Luftsteuerventils (83) in dem Luftansaugweg, um dem Abgasweg Luft zuzuführen, durch Öffnung des Luftsteuerventils (83) durch Öffnungsregelung eines Regelteils, worin dann, wenn Drehzahl/Öffnungswinkelminderungsinformation empfangen wird, die auf eine Bewegung aus einem Zustand, wo eine Motordrehzahl (Ne) einen Drehzahlschwellenwert (E) überschreitet oder ein Öffnungsschwellenwert (F) einer Drosselöffnung (θ th) eine vollständig offene Seite überschreitet, zu einem Bereich, wo die Motordrehzahl (Ne) unter dem Drehzahlschwellenwert (E) liegt und die Drosselöffnung (θ th) unter dem Öffnungsschwellenwert (F) liegt, hinweist, das Regelteil das Luftsteuerventil (83) schließt und regelt, um einen geschlossenen Zustand für eine bestimmte Dauer (T₁, T₂) beizubehalten, in der die unverbrannte Komponente in dem Abgas in dem Abgasweg (43a) abgegeben wird, und um das Luftsteuerventil (83) nach der bestimmten Dauer (T₁, T₂) zu öffnen, so dass Nachverbrennung, die eine explosive Verbrennung der unverbrannten Komponente ist, verhindert wird.

2. Abgasreiniger nach Anspruch 1,
worin dann, wenn eine plötzliche Verzögerungsinformation darauf hinweist, dass eine Verzögerungsrate der Motordrehzahl sich zu einer Verzögerungsschwellenrate (G) oder höher geändert hat, das Regelteil das Luftregelventil (83) schließt und für die bestimmte Dauer (T₁, T₂) auf einen geschlossenen Zustand regelt.

3. Abgasreiniger nach Anspruch 1,
worin dann, wenn die Drosselöffnung (θ th) den Öffnungsschwellenwert (F) überschreitet, das Regelteil eine Öffnungs- und Schließregelung des Luftsteuerventils (83) nur gemäß der Motordrehzahl (Ne) ausführt.

## Revendications

1. Purificateur de gaz d'échappement adapté pour brûler un composant non brûlé contenu dans un gaz d'échappement en raccordant un passage d'introduction d'air (87) à un passage d'échappement (43a) d'un moteur et en installant une soupape de régulation d'air (83) dans le passage d'introduction d'air pour alimenter en air le passage d'échappement en ouvrant la soupape de régulation d'air (83) en ouvrant le réglage d'une pièce de réglage, dans lequel lors de la réception de l'information de réduction d'angle de vitesse/ouverture indiquant un mouvement à partir d'un état, pour lequel une vitesse de moteur (Ne) dépasse un seuil de vitesse (E) ou pour lequel un seuil d'ouverture (F) d'une ouverture d'étrangleur (θₜₕ) est en excès d'un côté complètement ouvert, jusqu'à une région pour laquelle la vitesse du moteur (Ne) est au-dessous du seuil de vitesse (E) et pour laquelle l'ouverture d'étrangleur (θₜₕ) est au dessous du seuil d'ouverture (F), ladite pièce de réglage ferme ladite soupape de régulation d'air (83) et procède au réglage pour maintenir un état fermé pendant une durée spécifiée (T₁, T₂), pendant laquelle le composant non brûlé du gaz d'échappement dans le passage d'échappement (43a) est évacué, et pour ouvrir ladite soupape de régulation d'air (83) après ladite durée spécifiée (T₁, T₂), de sorte que la postcombustion, qui est la combustion explosive du composant non brûlé, soit empêchée.

2. Purificateur de gaz d'échappement selon la revendication 1, dans lequel lors d'une décélération soudaine, l'information indique qu'un taux de décélération de la vitesse du moteur a changé jusqu'à un taux de seuil de décélération (G) ou bien supérieur, ladite pièce de réglage ferme ladite soupape de régulation d'air (83) et procède au réglage jusqu'à un état fermé pendant ladite durée spécifiée (T₁, T₂).

3. Purificateur de gaz d'échappement selon la revendication 1, dans lequel, lorsque l'ouverture d'étrangleur (θₜₕ) dépasse le seuil d'ouverture (F), ladite pièce de réglage réalise le réglage de l'ouverture et de la fermeture de ladite soupape de régulation d'air (83) uniquement en fonction de la vitesse du moteur (Ne).
